# EUROPEAN PATENT APPLICATION

(11) **EP 4 603 216 A2**
(43) Date of publication of application: **20.08.2025**
(21) Application number: 25158116.1
(22) Date of filing: 14.02.2025
(51) Int. Cl.: B23B 47/28

(54) **SELF-CENTERING RULER ARRANGEMENT FOR TOOL**

(30) Priority: 16.02.2024 US 202463554333 P; 12.02.2025 US 202519052017
(71) Applicant: BAM IP Holding LLC, Saint Charles, IL 60175 (US)
(72) Inventor: Henry, Samuel D., Elgin, IL 60120 (US)
(74) Representative: Hoeger, Stellrecht & Partner Patentanwälte mbB

(57) **Abstract**

A drill jig system (100) for guiding a drill for forming mounting holes (106) in a workpiece (102) has a guide (114, 118) for locating the system relative to a workpiece. The guide and an arm (140, 142) to which it is mounted have a mating cross-sectional configuration to center the guide relative to the arm. Centering attachments (200) are provided for properly spacing a pair of drill guides (119) of the system to correspond to the spacing between mounting apertures (203) of a corresponding handle (108) to be mounted to the workpiece.

## Description

### CROSS-REFERENCE TO RELATED PATENT APPLICATIONS

This Patent Application claims the benefit of U.S. Provisional Patent Application No. 63/554,333, filed February 16, 2024, the entire teachings and disclosure of which are incorporated herein by reference thereto.

### FIELD OF THE INVENTION

This invention generally relates to tools for assisting in drilling holes in workpieces, such as cabinet doors and drawers for the installation of handles, knobs, hinges, and other cabinet components.

### BACKGROUND OF THE INVENTION

It is important to be able to properly align mounting holes for securing handles, knobs, pulls or other drawer and cabinet hardware relative to the respective the workpiece. This can include properly positioning the holes relative to the workpiece as well as properly positioning one mounting hole relative to another mounting hole such as for a component that requires at least two mounting holes for securing it to the workpiece.

Further, it is desirable to be able to repeatably and quickly locate the holes relative to the door or drawer front when moving from one door to another or from one drawer front to another. Thus, drill guides are used to align and guide a drill bit when drilling the mounting holes within the workpiece, e.g. into the door of a cabinet or the front of a drawer to provide the quick and accurate repeatability.

The present disclosure provides improvements in such a drill guide system.

### BRIEF SUMMARY OF THE INVENTION

New and improved drill jig systems are provided for guiding a drill bit.

In an example, an adjustable drill jig system for guiding a drill to drill holes in a workpiece is provided. The workpiece may have a top edge and a first workpiece face. The system includes a T-shaped member, a first guide, and a locking element. The T-shaped member has a first arm defining a first axis and a second arm defining a second axis. The first arm is attached to the second arm in a generally perpendicular orientation with the first and second axes generally perpendicular to one another. The first arm has opposed first and second sides extending generally parallel to the first axis. The first arm has a first face that is generally parallel to the workpiece in use. The first side is a first tapered surface extending at a non-perpendicular first angle to the first face. The first guide has a mounting channel receiving the first arm therein. The mounting channel has opposed first and second channel walls and a third channel wall between the first and second channel walls. The first channel wall extends at the first angle relative to third channel wall defining an undercut region therebetween. When assembled, the first channel wall is adjacent the first side of the first arm with the first side extending into the undercut region, the second channel wall is adjacent the second side, and the third channel wall is adjacent the first face. The locking element is mounted to the first guide for applying a biasing force to the second side of the first arm to bias the first side of the first arm into abutment with the first channel wall and into the undercut region to secure the first guide at an axial position along the first axis. The biasing force is applied along a biasing force axis that is non-perpendicular to the first side and the first channel wall such that the biasing force biases the first face towards the third channel wall by way of the abutment between the first side of the first arm and the first channel wall.

In one example, at least one drill guide is mounted to the second arm. The drill guide has a drill guide bore extending therethrough along a drill guide bore axis that is generally perpendicular to the first and second axes and generally perpendicular to the first workpiece face of the workpiece in use. The drill guide is adjustably positionable relative to the second arm along the second axis.

In one example, the first guide has a first workpiece locating abutment engageable with the first edge of the workpiece for locating the T-shaped member relative to the workpiece. The first workpiece locating abutment is generally orthogonal to the first axis.

In one example, the locking element is a threaded member threadedly attached to the first guide.

In one example, the locking element is selected from the group consisting of a spring biased pin, a latch, or a buckle.

In one example, the first angle is between about 30 and 75 degrees.

In one example, the third channel wall extends entirely between the first and second channel walls.

In one example, the biasing force biases the first face into the third channel wall.

In one example, the mounting channel has a fourth channel wall opposite the third channel wall. The fourth channel wall extends between the first and second channel walls. The mounting channel may be an aperture formed through the first guide

In one example, the second channel wall is generally orthogonal to the third channel wall and the second side of the first arm is generally orthogonal to the first face.

In an example, an adjustable drill jig system for guiding a drill to drill at least two holes in a workpiece at a predetermined spacing is provided. The workpiece has a top edge and a first workpiece face. The system includes a T-shaped member having a first arm defining a first axis and a second arm defining a second axis. The first arm is attached to the second arm in a generally perpendicular orientation with the first and second axes generally perpendicular to one another. A first guide is adjustably mounted to the first arm for adjusting a position of the first guide along the first axis. A first drill guide is mounted to the second arm. The first drill guide has a first drill guide bore defining a first guide bore axis that is generally perpendicular to the first and second axes and orthogonal to the first workpiece face in use. A second drill guide is mounted to the second arm. The second drill guide has a second drill guide bore defining a second guide bore axis that is generally perpendicular to the first and second axes, orthogonal to the first workpiece face in use, and parallel to the first guide bore axis. A first centering attachment has a first attachment body and a first centering pin defining a first pin axis. The first attachment body is configured to operably attach to the first drill guide with the first pin axis coaxial with the first guide bore axis. A second centering attachment has a second attachment body and a second centering pin defining a second pin axis. The second attachment body is configured to operably attach to the second drill guide with the second pin axis coaxial with the second guide bore axis. The first and second drill guides are mounted to the second arm such that a spacing between the first and second guide bore axes is adjustable.

In one example, the first and second centering pins are cone shaped.

In one example, the first attachment body is in the form of a clip and is C-shaped. The attachment body includes a pair of spaced apart legs that removably clip to the first drill guide.

In one example, the first attachment body includes a first locating pin that is insertable into the first drill guide bore to align the first pin axis with the first guide bore axis when attached to the first drill guide.

In one example, the first attachment body includes a base member. The first centering pin extends from the base member in a first direction. The first locating pin extends from the base member in a second opposite direction.

In one example, the first attachment body includes a pair of spaced apart legs configured to clip the first attachment body to the first drill guide with the first locating pin inserted into the first drill guide bore. The spaced apart legs extend form the base member in the second direction with the first locating pin positioned laterally between the pair of spaced apart legs.

In one example, the first drill guide is moveable relative to the second arm.

In one example, the first drill guide bore has a first inner diameter perpendicular to the first guide bore axis. The first centering pin has a first maximum outer diameter perpendicular to the first pin axis. The first maximum outer diameter is equal to or greater than the first inner diameter. As used herein a "diameter" need not be for a round object and could be the maximum dimension for an object that is polygonal in cross-section.

In one example, a locking member releasably fixes the position of the first drill guide to the second arm.

In an example, a method of adjusting the spacing between first and second drill guides of a drill jig system is provided. The method adjusts the spacing to correspond to a handle mounting spacing between first and second mounting apertures of a handle to be attached to the workpiece. The method includes:
aligning the first pin axis with the first guide bore axis;
aligning the second pin axis with the second guide bore axis;
inserting the first centering pin into the first mounting aperture of the handle;
adjusting the spacing between the first and second drill guides along the second axis and inserting the second centering pin into the second mounting aperture of the handle;
fixing the position of the first drill guide relative to the second drill guide to fix the spacing between the first and second drill guide axes to correspond to the handle mounting spacing.

In one example, the step of fixing the position of the first drill guide relative to the second drill guide includes fixing the position of the first drill guide relative to the second arm.

In one example, the first and second drill guides are moveable relative to the second arm. The method includes aligning a center of the handle between the first and second mounting apertures with a center of the first leg through which the first axis extends.

In an example, a centering attachment for use with a drill guide having a drill guide bore defining a guide bore axis is provided. The centering attachment includes an attachment body and a first centering pin defining a pin axis. The attachment body is configured to operably attach to the first drill guide with the pin axis coaxial with the guide bore axis.

In one example, the centering pin is cone shaped.

In one example, the attachment body is in the form of a clip and is C-shaped. The attachment body includes a pair of spaced apart legs that are configured to removably clip to the drill guide.

In one example, the attachment body includes a locating pin that is insertable into the drill guide bore to align the pin axis with the guide bore axis when attached to the drill guide.

In one example, the attachment body includes a base member. The first centering pin extends from the base member in a first direction. The first locating pin extends from the base member in a second opposite direction.

In one example, the attachment body includes a pair of spaced apart legs configured to clip the attachment body to the drill guide with the locating pin inserted into the drill guide bore. The spaced apart legs extend form the base member in the second direction with the locating pin positioned laterally between the pair of spaced apart legs.

In one example, the centering pin has a first maximum outer diameter perpendicular to the pin axis. The locating pin has a second maximum outer diameter perpendicular to the pin axis. The first maximum outer diameter is greater than the maximum outer diameter.

The solutions in accordance with the present invention comprise, in particular, the combinations of features defined by the following embodiments numbered consecutively.
1. An adjustable drill jig system for guiding a drill to drill holes in a workpiece, the workpiece having a top edge and a first workpiece face, the system comprising:
   a T-shaped member having a first arm defining a first axis and a second arm defining a second axis, the first arm attached to the second arm in a generally perpendicular orientation with the first and second axes generally perpendicular to one another, the first arm having opposed first and second sides extending generally parallel to the first axis, the first arm having a first face that is generally parallel to the workpiece in use, the first side being a first tapered surface extending at a non-perpendicular first angle to the first face;
   a first guide having a mounting channel receiving the first arm therein, the mounting channel having opposed first and second channel walls and a third channel wall between the first and second channel walls, the first channel wall extending at the first angle relative to third channel wall defining an undercut region, the first channel wall being adjacent the first side of the first arm with the first side extending into the undercut region, the second channel wall being adjacent the second side, and the third channel wall being adjacent the first face when the first guide is mounted on the first arm;
   and a locking element mounted to the second channel wall for applying a biasing force to the second side of the first arm to bias the first side of the first arm into abutment with the first channel wall and into the undercut region to secure the first guide at an axial position along the first axis, the biasing force being applied along a biasing force axis that is non-perpendicular to the first side and the first channel wall such that the biasing force biases the first face towards the third channel wall by way of the abutment between the first side of the first arm and the first channel wall.
2. The adjustable drill jig system of embodiment 1, further comprising at least one drill guide mounted to the second arm, the drill guide having a drill guide bore extending therethrough along a drill guide bore axis that is generally perpendicular to the first and second axes and generally perpendicular to the first workpiece face of the workpiece in use, the drill guide adjustably positionable relative to the second arm along the second axis.
3. The adjustable drill jig system of embodiment 1, wherein the first guide has a first workpiece locating abutment engageable with the first edge of the workpiece for locating the T-shaped member relative to the workpiece, the first workpiece locating abutment is generally orthogonal to the first axis.
4. The adjustable drill jig system of embodiment 1, wherein the locking element is a threaded member threadedly attached to the first guide.
5. The adjustable drill jig system of embodiment 1, wherein the locking element is selected from the group consisting of a spring biased pin, a latch, or a buckle.
6. The adjustable drill jig system of embodiment 1, wherein the first angle is between about 30 and 75 degrees.
7. The adjustable drill jig system of embodiment 1, wherein the third channel wall extends entirely between the first and second channel walls.
8. The adjustable drill jig system of embodiment 1, wherein the biasing force biases the first face into the third channel wall.
9. The adjustable drill jig system of embodiment 1, wherein the mounting channel has a fourth channel wall opposite the third channel wall, the fourth channel wall between the first and second channel walls, the mounting channel being an aperture formed through the first guide.
10. The adjustable drill jig system of embodiment 1, wherein the second channel wall is generally orthogonal to the third channel wall and the second side of the first arm is generally orthogonal to the first face.
11. An adjustable drill jig system for guiding a drill to drill at least two holes in a workpiece at a predetermined spacing, the workpiece having a top edge and a first workpiece face, the system comprising:
   a T-shaped member having a first arm defining a first axis and a second arm defining a second axis, the first arm attached to the second arm in a generally perpendicular orientation with the first and second axes generally perpen-dicular to one another;
   a first guide adjustably mounted to the first arm for adjusting a position of the first guide along the first axis; and
   a first drill guide mounted to the second arm having a first drill guide bore defining a first guide bore axis that is generally perpendicular to the first and second axes and orthogonal to the first workpiece face in use;
   a second drill guide mounted to the second arm having a second drill guide bore defining a second guide bore axis that is generally perpendicular to the first and second axes, orthogonal to the first workpiece face in use, and parallel to the first guide bore axis;
   a first centering attachment having a first attachment body and a first centering pin defining a first pin axis, the first attachment body configured to operably attach to the first drill guide with the first pin axis coaxial with the first guide bore axis;
   a second centering attachment having a second attachment body and a second centering pin defining a second pin axis, the second attachment body configured to operably attach to the second drill guide with the second pin axis coaxial with the second guide bore axis; wherein the first and second drill guides are mounted to the second arm such that a spacing between the first and second guide bore axes is adjustable.
12. The drill jig system of embodiment 11, wherein the first and second centering pins are cone shaped.
13. The drill jig system of embodiment 12, wherein the first attachment body is in the form of a clip and is C-shaped, the attachment body includes a pair of spaced apart legs that removably clip to the first drill guide.
14. The drill jig system of embodiment 13, wherein the first attachment body includes a first locating pin that is insertable into the first drill guide bore to align the first pin axis with the first guide bore axis when attached to the first drill guide.
15. The drill jig system of embodiment 14, wherein the first attachment body includes a base member, the first centering pin extending from the base member in a first direction, the first locating pin extending from the base member in a second opposite direction.
16. The drill jig system of embodiment 15, wherein the first attachment body includes a pair of spaced apart legs configured to clip the first attachment body to the first drill guide with the first locating pin inserted into the first drill guide bore, the spaced apart legs extending form the base member in the second direction with the first locating pin positioned laterally between the pair of spaced apart legs.
17. The drill jig system of embodiment 11, wherein the first drill guide is moveable relative to the second arm.
18. The drill jig system of embodiment 11, wherein the first drill guide bore has a first inner diameter perpendicular to the first guide bore axis and the first centering pin has a first maximum outer diameter perpendicular to the first pin axis, the first maximum outer diameter being equal to or greater than the first inner diameter.
19. The drill jig system of embodiment 17, including a locking member releasably fixing the position of the first drill guide to the second arm.
20. A method of adjusting the spacing between first and second drill guides of a drill jig system of any of embodiments 11-19 to correspond to a handle mounting spacing between first and second mounting apertures of a handle to be attached to the workpiece, the method comprising:
   aligning the first pin axis with the first guide bore axis;
   aligning the second pin axis with the second guide bore axis;
   inserting the first centering pin into the first mounting aperture of the handle;
   adjusting the spacing between the first and second drill guides along the second axis and inserting the second centering pin into the second mounting aperture of the handle; fixing the position of the first drill guide relative to the second drill guide to fix the spacing between the first and second drill guide axes to correspond to the handle mounting spacing.
21. The method of embodiment 20, wherein the step of fixing the position of the first drill guide relative to the second drill guide includes fixing the position of the first drill guide relative to the second arm.
22. The method of embodiment 20, wherein the first and second drill guides are moveable relative to the second arm;
   the method further including aligning a center of the handle between the first and second mounting apertures with a center of the first leg through which the first axis extends.
23. A centering attachment for use with a drill guide having a drill guide bore defining a guide bore axis, the centering attachment comprising:
   an attachment body and a first centering pin defining a pin axis, the attachment body configured to operably attach to the first drill guide with the pin axis coaxial with the guide bore axis.
24. The centering attachment of embodiment 23, wherein the centering pin is cone shaped.
25. The centering attachment of embodiment 23, wherein the attachment body is in the form of a clip and is C-shaped, the attachment body includes a pair of spaced apart legs that are configured to removably clip to the drill guide.
26. The centering attachment of embodiment 23, wherein the attachment body includes a locating pin that is insertable into the drill guide bore to align the pin axis with the guide bore axis when attached to the drill guide.
27. The centering attachment of embodiment 26, wherein the attachment body includes a base member, the first centering pin extends from the base member in a first direction, the first locating pin extending from the base member in a second opposite direction.
28. The centering attachment of embodiment 27, wherein the attachment body includes a pair of spaced apart legs configured to clip the attachment body to the drill guide with the locating pin inserted into the drill guide bore, the spaced apart legs extending form the base member in the second direction with the locating pin positioned laterally between the pair of spaced apart legs.
29. The drill jig system of embodiment 26, wherein:
   the centering pin has a first maximum outer diameter perpendicular to the pin axis; the locating pin has a second maximum outer diameter perpendicular to the pin axis; and
   the first maximum outer diameter being greater than the maximum outer diameter.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective illustration of an adjustable drill jig system mounted to a workpiece for drilling mounting holes into the workpiece;
FIG. 2 is a workpiece having a component such as handle mounted thereto;
FIG. 3 is a cross-sectional illustration of the handle positioned adjacent the workpiece;
FIG. 4 is a partial perspective illustration of the system of FIG. 1;
FIG. 5 is a plan view illustration of the system of FIG. 1;

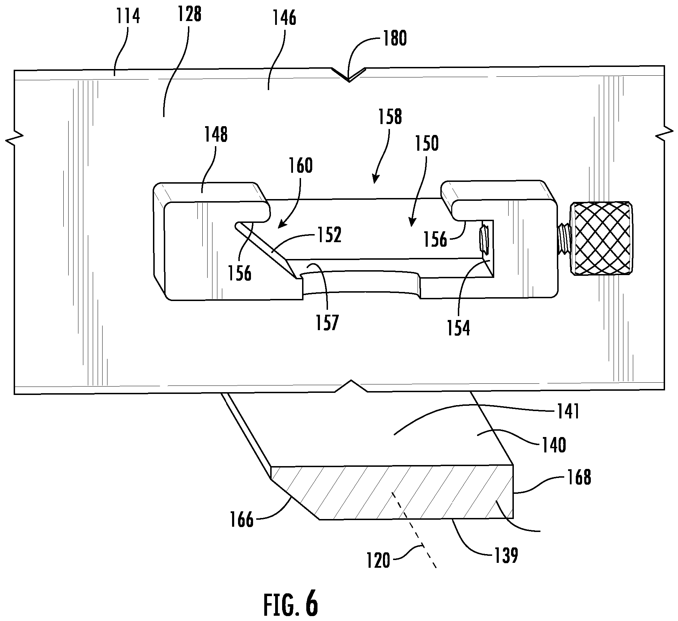

FIG. 6 is an exploded illustration of a first guide and an arm of the system of FIG. 1;

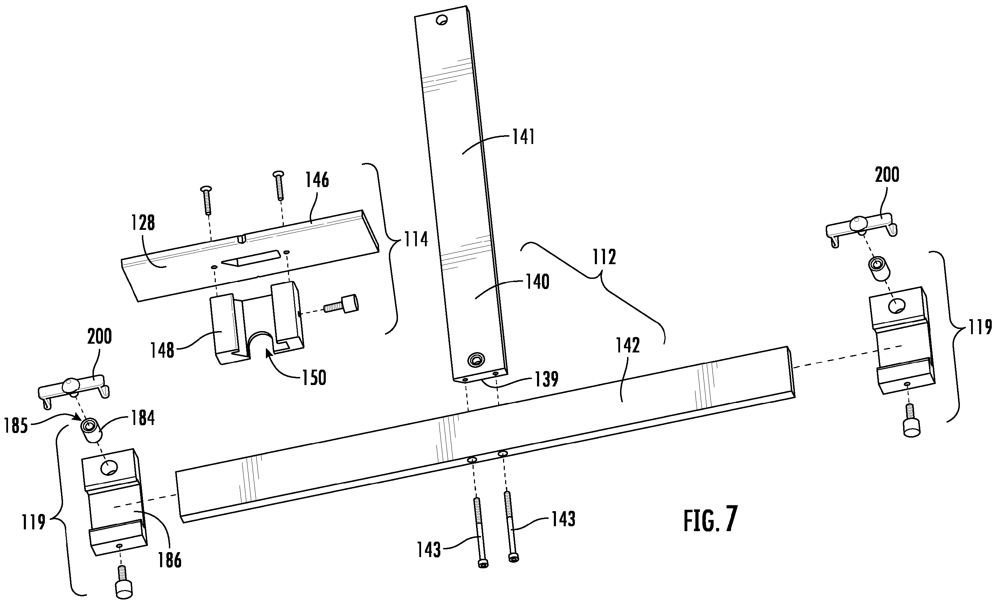

FIG. 7 is an exploded illustration of the system of FIG. 1;

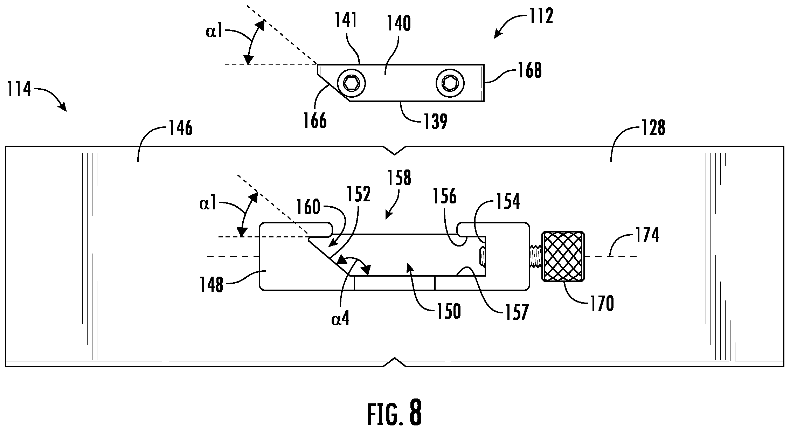

FIG. 8 is an exploded end view of a first arm and the first guide of the system of FIG. 1;
FIG. 9 is an assembled end view of the first arm and first guide of the system of FIG. 1;

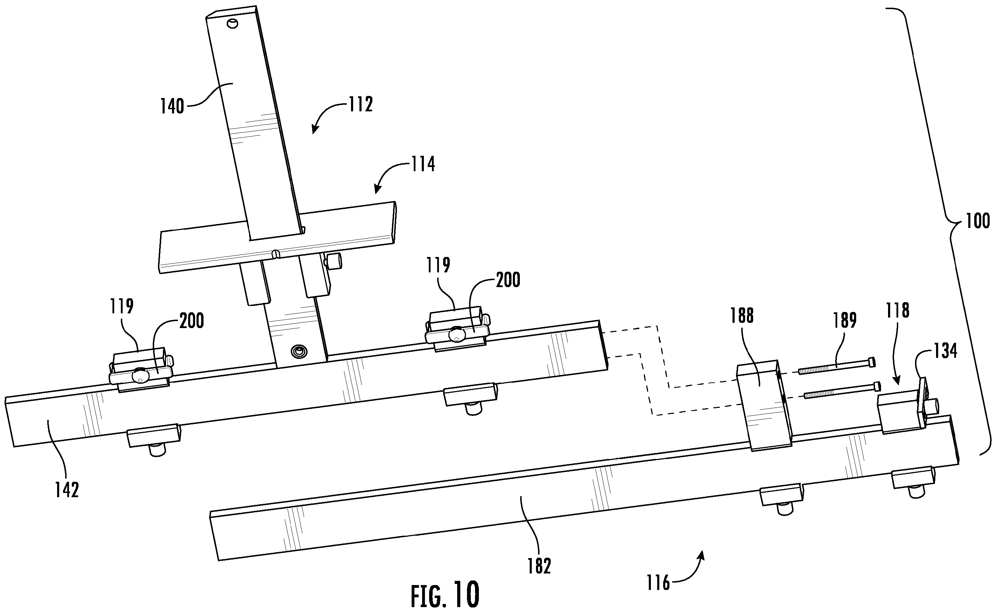

FIG. 10 is a further partial exploded illustration of the system of FIG. 1;
FIG. 11 is a partial portion of system of FIG. 1 to a workpiece incorporating centering attachments;
FIG. 12 illustrates the system of FIG. 11 in use with a handle;
FIG. 13 is an exploded cross-sectional illustration of the system of FIG. 11 incorporating centering attachments and a corresponding handle;
FIG. 14 is a cross-sectional illustration of the system of FIG. 11 after using a handle with the centering attachments to properly space the drill guides thereof; and
FIG. 15 is a cross-sectional illustration of the system of FIG. 11 prior to using the handle with the centering attachments to properly space the drill guides thereof.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

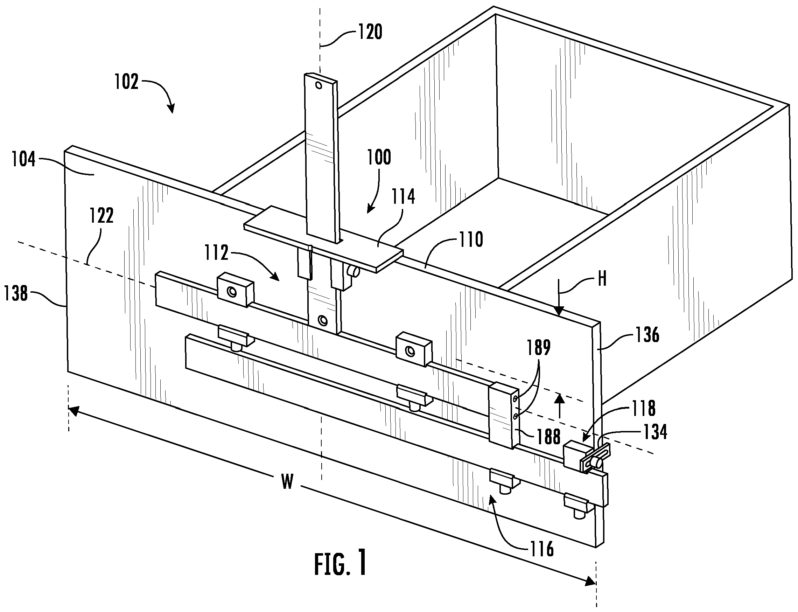

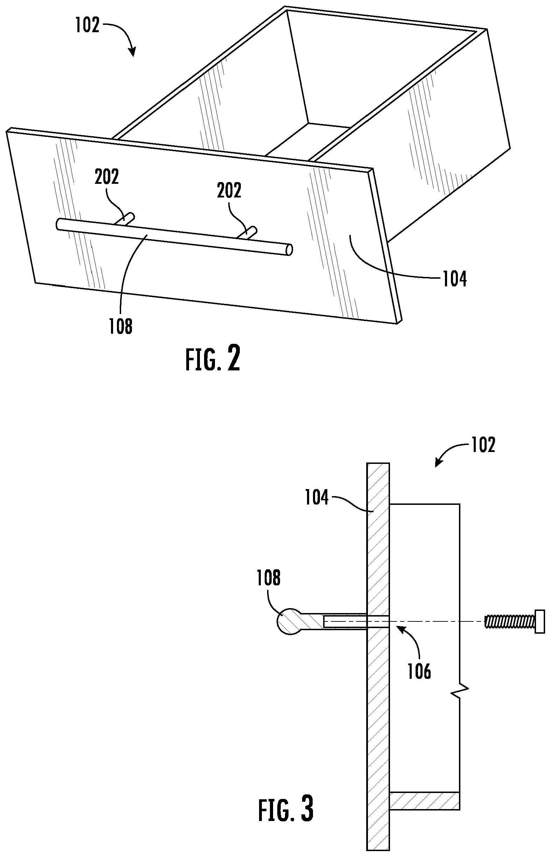

FIG. 1 illustrates an adjustable drill jig system 100 mounted to a workpiece 102. The workpiece 102 is in the form of a drawer that has a drawer front 104. The system 100 may be used for forming holes 106 in the drawer front 104 for mounting a handle or pull 108 to the workpiece 102 (see e.g. FIGS. 2 and 3).

The system 100 can be used for locating the holes 106 at a desired location on the workpiece 102, such as centered along with width W of the drawer front 104 and at a desired vertical height H, such as relative to the top side 110.

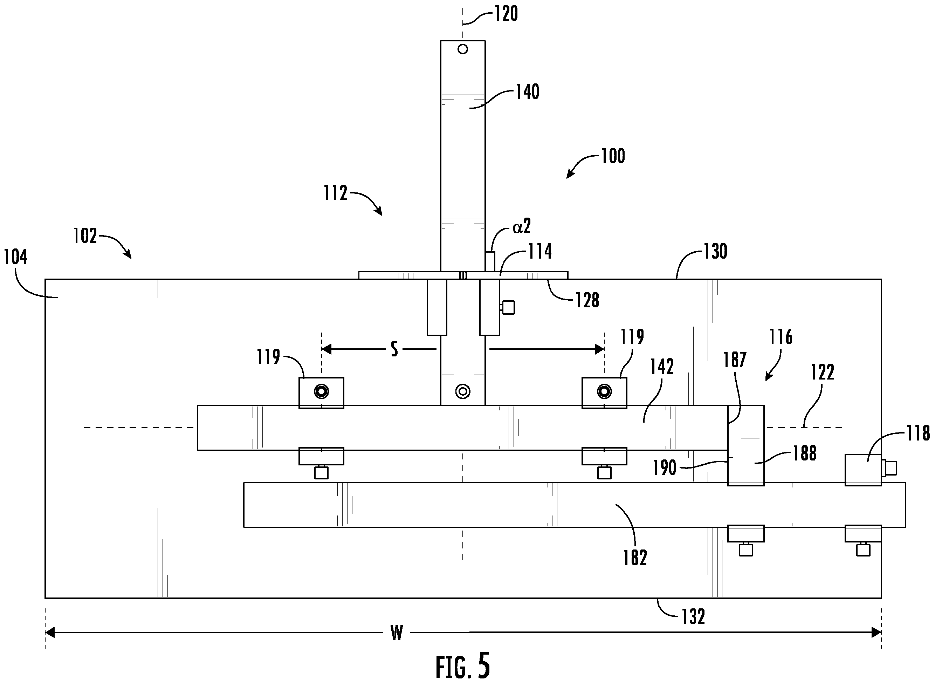

FIG. 5 illustrates the system 100 removed from the workpiece 102.

The system 100 generally includes a T-shaped member 112, a first guide 114, an extension arrangement 116, a second guide 118 and at least one drill guide 119 (two being illustrated).

The first guide 114 may be used for locating the system 100 along a first axis 120 (e.g. vertically or relative to a top or bottom edge) relative to the workpiece 102 while the second guide 118 may be used for locating the system 100 along a second axis 122 (e.g. horizontally or relative to a vertically oriented edge) relative to the workpiece 102. In general, the first and second guides 114, 118 are generally used for locating the system 100 along first and second axes 120, 122 that are perpendicular to one another.

The first guide 114 has a first workpiece locating abutment 128 (also referred to as first abutment 128) for locating against an edge, e.g. top or bottom edge 130, 132 of the workpiece 102 for positioning the system 100 relative to axis 120. The second guide 118 includes a second workpiece locating abutment 134 (also referred to as second abutment 134) for locating against an edge, e.g. vertical edge 136, 138 of the workpiece 102 for positioning the system 100 relative to axis 122.

The drill guides 119 can be adjustably positioned within system 100. For example, the spacing S between the drill guides 119 can be adjusted to adjust the spacing between holes to be drilled into the workpiece 102.

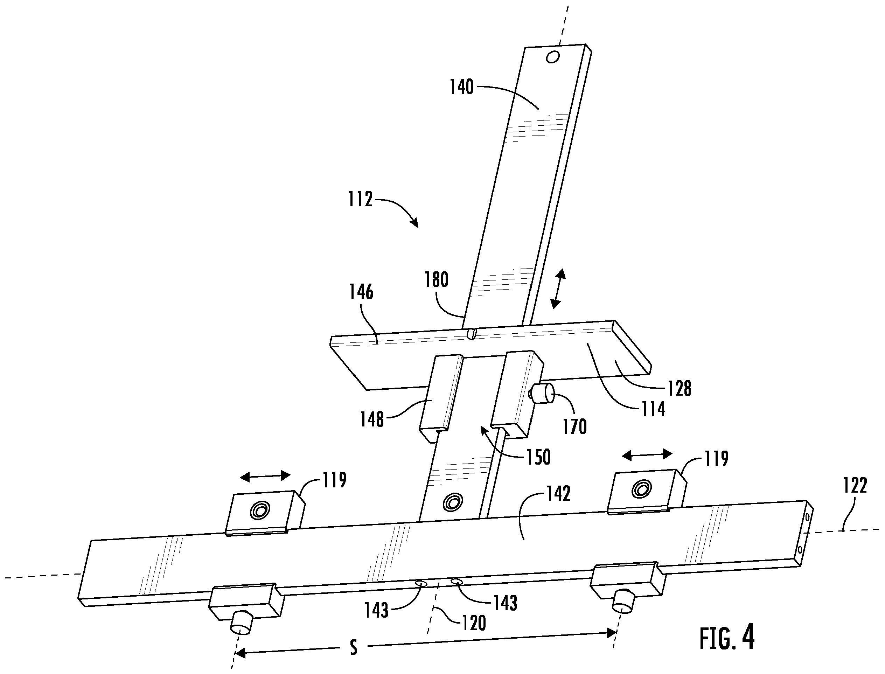

The T-shaped member 112 includes a first arm 140 that generally aligns with first axis 120 and a second arm 142 that generally aligns with the second axis 122 and is attached to the first arm 140 in a generally perpendicular orientation. In the illustrated example, the screws 143 (FIG. 4) secure the first arm 140 to the second arm 142. However, in other examples, the first and second arms could be formed from a single continuous piece of material. Such a one piece component would still be considered to have the first arm 140 attached to the second arm 142.

The T-shaped member 112 generally has a rear face 139 that faces the workpiece in use and a front face 141 that faces away from the workpiece in use.

In this example, the first and second arms 140, 142 are in the form of rulers. Thus, the front face 141 includes a plurality of measurement indicia printed thereon and/or formed therein for assisting the user in properly establishing spacing S of the drill guides 119 as well as locating the drill guides 119 relative to the workpiece 102.

The first guide 114 is axially moveable along first arm 140 parallel to first axis 120.

The first guide 114 includes a first workpiece locating abutment 146 that provides first abutment 128 that is attached to a mounting body 148. The mounting body provides a mounting channel 150. The mounting channel 150 receives the first arm 114. The mounting body 148 is slidable along the first arm 114 to adjust the position of the first guide 114 and particularly first abutment 128 parallel to first axis 120.

The mounting body 148 has opposed first and second channel walls 152, 154, a third channel wall extending generally between the first and second channel walls 152, 154, and an optional fourth channel wall 157 spaced apart from the third channel wall 156 and extending generally between the first and second channel walls 152, 154.

In this example, the third channel wall 156 is formed by a pair of laterally spaced apart wall segments with a lateral gap 158 formed therebetween. However, in other examples, the third channel wall may extend continuously between the first and second channel walls 152, 154.

In this example, the fourth channel wall 157 is a single wall portion extending between the first and second channel walls 152, 154 but could be formed from separate wall segments similar to the third channel wall 156. While not required, in this example, the third and fourth channel walls are parallel to one another and orthogonal to the second channel wall 154.

The first channel wall 152 extends at a non-parallel, non-perpendicular first angle α1 relative to the third channel wall 156. Due to the first angle α1 orientation, the first channel wall 152 and third channel wall 156 define an undercut region 160.

First angle α1 is preferably between about 30 and 75 degrees, more preferably between about 35 and 45 degrees and even more preferably approximately 40 degrees.

In this example, the second channel wall 154 is generally orthogonal to the third channel wall 156. However, it need not be orthogonal in all examples.

In this example, a fourth channel wall 157 extends between the first and second channel walls 152, 154, but not all embodiments require this fourth channel wall 157. In this example, the fourth channel wall extends entirely between the first and second channel walls 152, 154. However, in other examples, the fourth channel wall 157 could be formed from wall segments similar to the third channel wall 156.

The first arm 140 has a cross-sectional shape that generally corresponds to the cross-sectional shape of the first mounting channel 150 defined by the first-fourth channel walls 152, 154, 156, 157. In particular, by rear face 139 may also be considered a rear side 139 of the first arm 140 and the front face 141 may be considered a front side 141 of the first arm. First and second sides 166, 168 extend between the rear and front sides 139, 141.

To have a corresponding cross-sectional shape, the first side 166 is a tapered surface that extends at the first angle α1 relative to the front side 141. The second side 168 is generally orthogonal to the rear and front sides 139, 141.

When the first guide 114 is mounted to the first arm 140, the first side 166 will be adjacent the first channel wall 152, the second side 168 will be adjacent the second channel wall 154, the front side 141 will be adjacent the third channel wall 156 and the rear side 139 will be adjacent the fourth channel wall 157.

A locking element 170 is carried by the first guide 114. In this example, the locking element 170 is a thumbscrew threadedly attached to the mounting body 148 that can extend through the second channel wall 154.

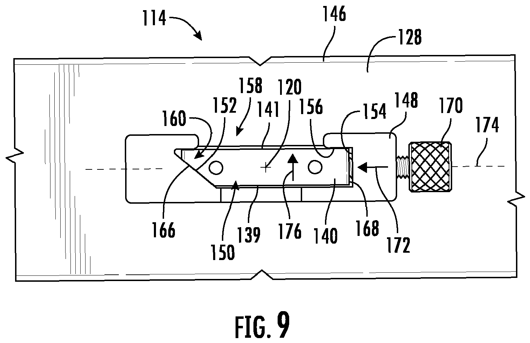

With reference to FIG. 9, the locking element 170 is configured to apply a biasing force 172 (illustrated by arrow 172) to the second side 158 of the first arm 140 to bias the first side 166 of the first arm 140 into abutment with the first channel wall 152 to secure the first guide 114 at an axial position along the first axis 120. The biasing force 172 is applied along a biasing force axis 174 that is non-perpendicular to the first side 166 and the first channel wall 152 such that the biasing force 172 biases the front face 141 towards the third channel wall 156 (illustrated by arrow 176) by way of the abutment between the first side 166 of the first arm 140 and the first channel wall 152.

To provide repeatability and quick setup when transition from one workpiece to the next, e.g. when installing many handles or pulls within a kitchen, it is valuable to make sure that the system 100 is square and particularly that the first arm 140 is square to the first guide 114.

The biasing provided by biasing force 172 self-centers the first arm 140 relative to the first guide 114. This self -centering makes sure that the first arm 140 is square to the first guide 114, such as illustrated by angle α2 in FIG. 5. The biasing force 172 also forces the front face 141 against the third channel wall 156 to make sure that the first arm 140 is not rotated about first axis 120 relative to the first guide 114. Thus, this makes sure that the first arm 140 is parallel to the workpiece 102.

While illustrated as a single thumbscrew, multiple thumbscrews could be provided. Also, latches, buckles, wedges, clamps, a spring biased pin, or other devices for provided biasing force 172 could be provided as a locking element.

In one example, the first guide 114 has a centering mark 180 that represents a center of the system 100. When biasing force 172 is applied forcing first side 166 into the first channel wall 152, the centering mark 180 aligns with a center of the second arm 142 along axis 122.

While second guide 118 is illustrated as being attached to a third arm 182 of the extension arrangement 118. The second guide 118 could be slidably attached to the second arm 142.

The drill guides are configured to be slidable along the second or third arms 154, 182 to adjust their lateral position along the second axis 122.

The drill guides 119 include guide inserts 184 that are threaded into the guide body 186 of the drill guides 119. The guide insert 184 includes a drill guide bore 185 that is used to guide a corresponding drill bit during drilling operations. The drill guide bore 185 has a drill guide bore axis 187 that is generally perpendicular to the first and second axes 120, 122 and generally perpendicular to the first workpiece when in use.

While not mounted to a moveable drill guide body, the first arm 140 also includes a drill guide insert mounted therein that is aligned with the drill guide inserts of the drill guides 119 mounted to second arm 142. This drill guide insert provides a third guide hole. In some implementations, this drill guide hole would be used when only a single hole is drilled, such as when drilling for a knob that has a single attachment member (e.g. a single screw).

In this example, an attachment bar 188 is attached to an end 187 of the second arm 142 and connects the third arm 182 to the second arm 142. The attachment bar 188 is secured to the end of second arm 142 by screws 189 that thread into the end of the second arm 142. The third arm 182 may slide relative to the attachment bar 188 to adjust the relative positioning of the second and third arms 142, 182 so as to accommodate work pieces that have a large width W.

Here, a side 190 of the attachment bar 188 abuts the end 187 of the second arm 142. This abutting relationship makes sure that the attachment bar 188 is square to the second arm 142.

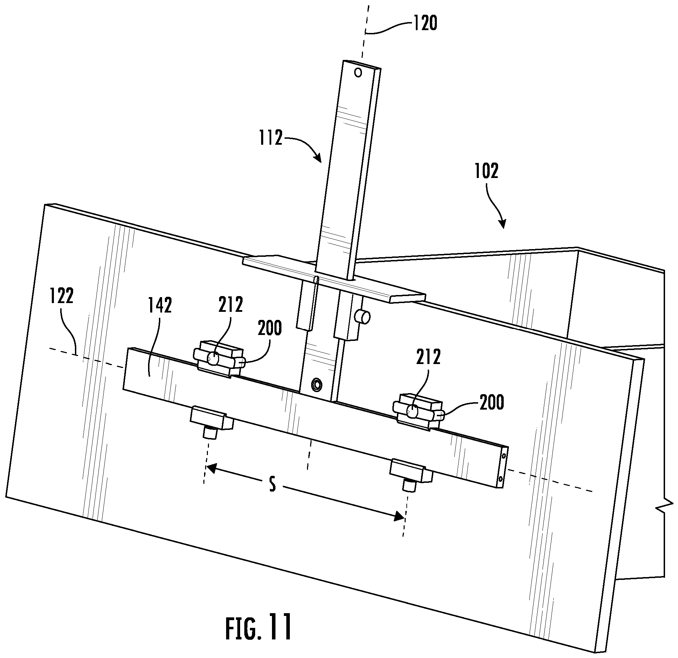

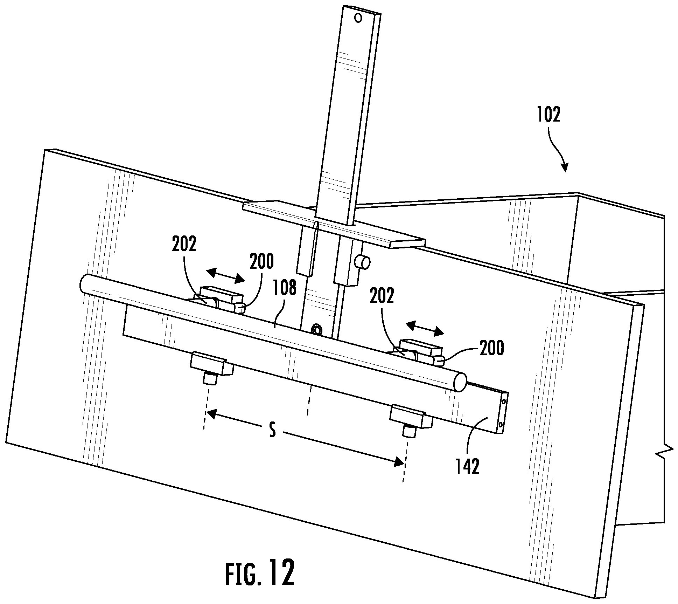

With reference to FIGS. 11-15, while the first guide 114 provides for improved accuracy for the system, the system 100 also includes first and second centering attachments 200 configured to properly and quickly space the guide bores 185 of the drill guides 119 for drilling attachment holes for attaching handles or pulls 108 that have at least two attachment points 202, such as handle 108 in FIG. 12.

The first and second centering attachments 200 removably attach to the drill guides 119 and cooperate with the attachment points 202 of the handle 108. In particular, a portion of the centering attachments 200 extend into apertures 203 in the attachment points 202 of the handle 108 to properly adjust spacing S between the drill guides 119.

The centering attachments 200 each have an attachment body 210 and centering pin 212 that defines a pin axis 214. The attachment body 210 is configured to operably attach to a corresponding centering attachments 200 to the drill guide 119 with the pin axis 214 coaxial with the corresponding guide bore axis 187 .

In the illustrated example, the centering pin 212 is cone shaped such that the centering pin 212 self-centers within the apertures 203 of attachment points 202 of the handle 108. Thus, when a user inserts the tip of the centering pin 212 with in the apertures 203 and pushes the handle against the centering attachments 200, the drill guides 119 will slide along second arm 142 to the appropriate spacing S for drilling the holes for handle 108.

The attachment body 210 may be in the form of a clip that is generally C-shaped. The attachment body 210 may have spaced apart legs 220 for removably clipping the attachment body 210 to the sides of the guide body 186 of the drill guide 119. In one example, the legs 220 provide a friction fit engagement with the guide body 119. In other examples, there may be a catch that provides an undercut that extends into or around a portion of the guide body 119 to provide an interference attachment of the attachment body 210 to the guide body 186.

To properly align the centering pin 212 with the guide bores 185 and their guide bore axis 187 and pin axis 214, a locating pin 230 may be provided. The locating pin 230 is sized and configured to extend into the guide bores 185 when the attachment body 210 is properly secured to the guide body 186.

In this example, the legs 220 extend from a base member 221. In particular, legs 220 extend on a first side of the base member 221. The centering pin 212 extends on an opposite second side of the base 221. In other words, the legs 220 extend from the base member 221 in a first direction generally parallel to axes 187, 214 while the centering pin 212 extends in a second direction opposite the first direction generally parallel to axes 187, 214.

Further yet, in this example, the locating pin 230 extends in the same first direction on a first side of the base member 221 as the legs 220. In this example, the locating pin 230 is straddled by legs 220 such that the locating pin is positioned laterally between the pair of legs 220.

In this example, the drill guide bore 185 has a first inner diameter that is perpendicular to axis 187. The centering pin has a first maximum outer diameter perpendicular to the pin axis 214. The first maximum outer diameter is equal to or greater than the first inner diameter. By providing this relationship, the centering pin will always be greater than the inner diameter of aperture 203 of the attachment point 202 of the relevant handle 108. This prevents potential inaccuracy if the centering pin 212 was smaller in outer dimension than the inner diameter of bore 185 or aperture 203.

Similarly, the outer diameter of the locating pin 230 is sized to press fit or friction fit within the bore 185.

At least one of the drill guides 119 and preferably all of the drill guides 119 are adjustably positionable parallel to axis 122 along the second arm 142. Locking members are provided to releasably fix the position of the drill guides 119 relative to the second arm 142.

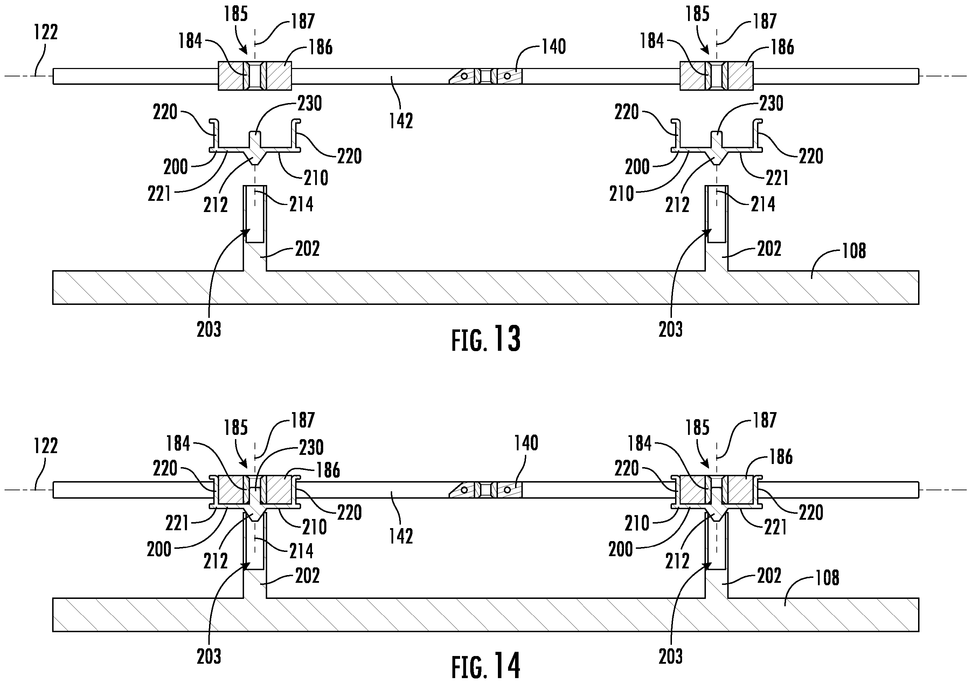

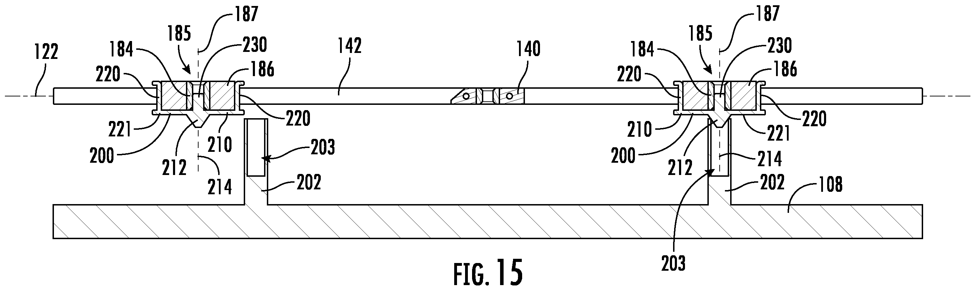

FIG. 15 illustrates the system 100 prior to having the drill guides 119 at the proper spacing S that corresponds to the mounting handle mounting spacing (e.g. space between apertures 203). FIG. 14 illustrates using the handle 108 and centering attachments 200 to properly space the drill guides 119 along second arm 142.

In operation, a method of use includes adjusting the spacing between first and second drill guides 119 of a drill jig system 100 to correspond to a handle mounting spacing between first and second mounting apertures 203 of handle 108 to be attached to the workpiece 102 using the centering attachments 200.

The method includes aligning a first pin axis 214 of a first centering attachment 200 with a first guide bore axis 187. The method includes aligning the second pin axis 214 of a second centering attachment 200 with a second guide bore axis 185 of a second drill guide 118.

Then, the user inserts the first centering pin 214 into a first mounting aperture 203 of the handle 108.

Then, the user adjusts the spacing S between the first and second drill guides 119 along the second axis 122 and inserts the second centering pin 214 into the second mounting aperture 203 of the handle 108.

With the spacing S correct, the user can fix the position of the first drill guide 119 relative to the second drill guide 119 to fix the spacing S between the first and second drill guide axes 185 to correspond to the handle mounting spacing (e.g. spacing between the apertures 203 of the handle attachment points 202.

In one method, the step of fixing the position of the first drill guide119 relative to the second drill guide 119 includes fixing the position of the first drill guide 119 relative to the second arm 142.

A method may also include a center of the handle 108 between the first and second mounting apertures 203 with a center of the first leg 140 or centering mark 180 through which the first axis 120 extends.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An adjustable drill jig system for guiding a drill to drill holes in a workpiece, the workpiece having a top edge and a first workpiece face, the system comprising:
a T-shaped member having a first arm defining a first axis and a second arm defining a second axis, the first arm attached to the second arm in a generally perpendicular orientation with the first and second axes generally perpendicular to one another, the first arm having opposed first and second sides extending generally parallel to the first axis, the first arm having a first face that is generally parallel to the workpiece in use, the first side being a first tapered surface extending at a non-perpendicular first angle to the first face;
a first guide having a mounting channel receiving the first arm therein, the mounting channel having opposed first and second channel walls and a third channel wall between the first and second channel walls, the first channel wall extending at the first angle relative to third channel wall defining an undercut region, the first channel wall being adjacent the first side of the first arm with the first side extending into the undercut region, the second channel wall being adjacent the second side, and the third channel wall being adjacent the first face when the first guide is mounted on the first arm; and
a locking element mounted to the second channel wall for applying a biasing force to the second side of the first arm to bias the first side of the first arm into abutment with the first channel wall and into the undercut region to secure the first guide at an axial position along the first axis, the biasing force being applied along a biasing force axis that is non-perpendicular to the first side and the first channel wall such that the biasing force biases the first face towards the third channel wall by way of the abutment between the first side of the first arm and the first channel wall.

2. The adjustable drill jig system of claim 1, further comprising at least one drill guide mounted to the second arm, the drill guide having a drill guide bore extending therethrough along a drill guide bore axis that is generally perpendicular to the first and second axes and generally perpendicular to the first workpiece face of the workpiece in use, the drill guide adjustably positionable relative to the second arm along the second axis.

3. The adjustable drill jig system of claim 1, wherein the first guide has a first workpiece locating abutment engageable with the first edge of the workpiece for locating the T-shaped member relative to the workpiece, the first workpiece locating abutment is generally orthogonal to the first axis.

4. The adjustable drill jig system of claim 1, wherein the locking element is a threaded member threadedly attached to the first guide or alternatively, wherein the locking element is selected from the group consisting of a spring biased pin, a latch, or a buckle.

5. The adjustable drill jig system of claim 1, wherein the first angle is between about 30 and 75 degrees.

6. The adjustable drill jig system of claim 1, wherein the mounting channel has a fourth channel wall opposite the third channel wall, the fourth channel wall between the first and second channel walls, the mounting channel being an aperture formed through the first guide.

7. An adjustable drill jig system for guiding a drill to drill at least two holes in a workpiece at a predetermined spacing, the workpiece having a top edge and a first workpiece face, the system comprising:
a T-shaped member having a first arm defining a first axis and a second arm defining a second axis, the first arm attached to the second arm in a generally perpendicular orientation with the first and second axes generally perpendicular to one another;
a first guide adjustably mounted to the first arm for adjusting a position of the first guide along the first axis; and
a first drill guide mounted to the second arm having a first drill guide bore defining a first guide bore axis that is generally perpendicular to the first and second axes and orthogonal to the first workpiece face in use;
wherein in particular the first drill guide is moveable relative to the second arm
and/or wherein in particular a locking member releasably fixing the position of the first drill guide to the second arm;
a second drill guide mounted to the second arm having a second drill guide bore defining a second guide bore axis that is generally perpendicular to the first and second axes, orthogonal to the first workpiece face in use, and parallel to the first guide bore axis;
a first centering attachment having a first attachment body and a first centering pin defining a first pin axis, the first attachment body configured to operably attach to the first drill guide with the first pin axis coaxial with the first guide bore axis;
a second centering attachment having a second attachment body and a second centering pin defining a second pin axis, the second attachment body configured to operably attach to the second drill guide with the second pin axis coaxial with the second guide bore axis;
wherein the first and second drill guides are mounted to the second arm such that a spacing between the first and second guide bore axes is adjustable.

8. The drill jig system of claim 7, wherein the first and second centering pins are cone shaped.

9. The drill jig system of claim 8, wherein the first attachment body is in the form of a clip and is C-shaped, the attachment body includes a pair of spaced apart legs that removably clip to the first drill guide; and
optionally, the first attachment body includes a first locating pin that is insertable into the first drill guide bore to align the first pin axis with the first guide bore axis when attached to the first drill guide
optionally, the first attachment body includes a base member, the first centering pin extending from the base member in a first direction, the first locating pin extending from the base member in a second opposite direction
optionally, the first attachment body includes a pair of spaced apart legs configured to clip the first attachment body to the first drill guide with the first locating pin inserted into the first drill guide bore, the spaced apart legs extending form the base member in the second direction with the first locating pin positioned laterally between the pair of spaced apart legs

10. The drill jig system of claim 7, wherein the first drill guide bore has a first inner diameter perpendicular to the first guide bore axis and the first centering pin has a first maximum outer diameter perpendicular to the first pin axis, the first maximum outer diameter being equal to or greater than the first inner diameter.

11. A method of adjusting the spacing between first and second drill guides of a drill jig system of any one of claims 7-10 to correspond to a handle mounting spacing between first and second mounting apertures of a handle to be attached to the workpiece, the method comprising:
aligning the first pin axis with the first guide bore axis;
aligning the second pin axis with the second guide bore axis;
inserting the first centering pin into the first mounting aperture of the handle;
adjusting the spacing between the first and second drill guides along the second axis and inserting the second centering pin into the second mounting aperture of the handle;
fixing the position of the first drill guide relative to the second drill guide to fix the spacing between the first and second drill guide axes to correspond to the handle mounting spacing
in particular, wherein the step of fixing the position of the first drill
guide relative to the second drill guide includes fixing the position of the first drill guide relative to the second arm
and/or wherein in particular the first and second drill guides are moveable relative to the second arm
and/or wherein in particular the method further including aligning a center of the handle between the first and second mounting apertures with a center of the first leg through which the first axis extends.

12. A centering attachment for use with a drill guide having a drill guide bore defining a guide bore axis, the centering attachment comprising:
an attachment body and a first centering pin defining a pin axis, the attachment body configured to operably attach to the first drill guide with the pin axis coaxial with the guide bore axis.

13. The centering attachment of claim 12, wherein the centering pin is cone shaped.

14. The centering attachment of claim 12, wherein the attachment body is in the form of a clip and is C-shaped, the attachment body includes a pair of spaced apart legs that are configured to removably clip to the drill guide.

15. The centering attachment of claim 12, wherein the attachment body includes a locating pin that is insertable into the drill guide bore to align the pin axis with the guide bore axis when attached to the drill guide;
optionally, wherein the attachment body includes a base member, the first centering pin extends from the base member in a first direction, the first locating pin extending from the base member in a second opposite direction
optionally, wherein the attachment body includes a pair of spaced apart legs configured to clip the attachment body to the drill guide with the locating pin inserted into the drill guide bore, the spaced apart legs extending form the base member in the second direction with the locating pin positioned laterally between the pair of spaced apart legs
optionally, wherein:
the centering pin has a first maximum outer diameter perpendicular to the pin axis;
the locating pin has a second maximum outer diameter perpendicular to the pin axis; and
the first maximum outer diameter being greater than the maximum outer diameter.
